# EUROPÄISCHE PATENTSCHRIFT

(11) **EP 1 209 047 B1**
(45) Veröffentlichungstag und Bekanntmachung des Hinweises auf die Patenterteilung: **05.01.2005**
(21) Anmeldenummer: 01126483.5
(22) Anmeldetag: 09.11.2001
(51) Int. Cl.: B60R 22/415, B60R 21/01

(54) **Gurtaufroller für einen Fahrzeug-Sicherheitsgurt**
Belt retractor for a vehicle seat belt
Enrouleur de ceinture de sécurité pour véhicule

(30) Priorität: 16.11.2000 DE 20019468 U
(43) Veröffentlichungstag der Anmeldung: 29.05.2002
(73) Patentinhaber: TRW Automotive GmbH, 73553 Alfdorf (DE)
(72) Erfinder: Snyder, Lloyd, Oxford, Michigan 48371 (US)
(74) Vertreter: Sties, Jochen, Dipl.-Ing.

(56) Entgegenhaltungen:
- EP-A- 0 298 123
- EP-A- 0 718 159
- EP-A- 0 858 936
- DE-A- 19 648 515
- DE-U- 29 520 425
- US-A- 5 501 293

## Beschreibung

Die Erfindung betrifft einen Gurtaufroller für einen Fahrzeug-Sicherheitsgurt, mit einem Rahmen, einer Gurtspule, die in dem Rahmen drehbar angebracht ist, einem Sperrmechanismus mit einer Auslösescheibe, mittels dem die Gurtspule drehfest gegen Gurtbandabzug im Rahmen blockiert werden kann, einer Steuerscheibe und einem Untersetzungsgetriebe, das die Gurtspule mit der Steuerscheibe koppelt, wobei ein Kipphebel vorgesehen ist, der von der Steuerscheibe zwischen einer Freigabestellung, in der er nicht mit der Auslösescheibe zusammenwirkt, und einer Blockierstellung verschwenkbar ist, in der er in die Auslösescheibe eingreift, wodurch die Gurtspule drehfest blockiert werden kann, und ein Schalter, der von der Steuerscheibe betätigt werden kann, wenn eine vorbestimmt Menge Gurtband von der Gurtspule abgezogen und die Steuerscheibe in eine bestimmte Stellung verdreht wurde, wobei die Steuerscheibe mit zwei Anschlägen versehen ist.

Ein solcher Gurtaufroller ist aus der EP-A-0 858 936 bekannt. Die Steuerscheibe ist hier durch ein Planetenrad eines Planetenradgetriebes gebildet und dient dazu, eine sogenannte Kindersicherung zu schalten. Bei aktivierter Kindersicherung kann das Gurtband nicht mehr vom Gurtaufroller abgezogen werden, sondern nur noch aufgewickelt werden. Dies ermöglicht, einen Kindersitz fest mit dem Fahrzeug zu verbinden. Zur Aktivierung der Kindersicherungsfunktion wird das Gurtband nahezu vollständig von der Gurtspule abgezogen. Die Kindersicherung wird automatisch deaktiviert, wenn das Gurtband wieder nahezu vollständig auf die Gurtspule aufgewickelt ist. Zusätzlich zur Kindersicherung ist ein Schalter vorgesehen, durch dessen Betätigung eine sogenannte Insassenerfassung erfolgen kann, also die Information erhalten werden kann, ob der dem Gurtaufroller zugeordnete Fahrzeugsitz besetzt ist oder nicht. Wenn das Vorhandensein eines Fahrzeuginsassen festgestellt wird, können verschiedene Sicherheitssysteme freigeschaltet werden, beispielsweise ein Gurtstraffer. Wenn der Sicherheitsgurt nicht benutzt wird, bleibt der Gurtstraffer bei einem Fahrzeugunfall deaktiviert, da die Straffung eines nicht benutzten Gurtes keinen Vorteil bringt.

Aus der EP-A-0 718 159 ist ein Gurtaufroller bekannt, bei dem eine Kindersicherungsfunktion verwirklicht ist. Der hierfür verwendete Hebel wirkt mit einem Schalter zusammen, so daß ein elektrisches Signal erzeugt werden kann, welches angibt, ob die Kindersicherungsfunktion aktiviert ist oder nicht. Abhängig von diesem Signal kann die Aktiviernng eines Gasgenerators eines Airbags verhindert werden.

Die Aufgabe der Erfindung besteht darin, einen Gurtaufroller der eingangs genannten Art dahingehend weiterzubilden, daß mit geringem Aufwand sowohl eine Kindersicherungsfunktion als auch eine Insassenerfassung verwirklicht werden können.

Zu diesem Zweck ist erfindungsgemäß vorgesehen, daß die beiden Anschläge mit dem Kipphebel zusammenwirken und ihn von der Freigabestellung in die Blockierstellung bringen können, und umgekehrt. Der erfindungsgemäße Gurtaufroller vereint die beiden Funktionen Kindersicherung und Insassenerfassung dadurch, daß eine einzige Steuerscheibe sowohl den Kipphebel schaltet, mittels dem die Kindersicherungsfunktion verwirklicht werden kann, als auch den Schalter direkt oder indirekt betätigt, mittels dem erfaßt werden kann, ob Gurtband vom Gurtaufroller abgezogen wurde, was indirekt auf das Vorhandensein eines Fahrzeuginsassen schließen läßt. Der Kipphebel wird dabei unmittelbar von den beiden Anschlägen geschattet.

Vorzugsweise ist der Schalter ein Mikroschalter mit einem Taster, der von einer Rampenfläche an der Steuerscheibe betätigt werden kann. Dies ergibt einen minimalen Bauaufwand, da der Mikroschalter lediglich so am Gurtaufroller befestigt werden muß, daß er unmittelbar von der Steuerscheibe betätigt wird.

Vorzugsweise wirkt der Kipphebel mit einer Totpunktfeder so zusammen, daß die Blockierstellung und die Freigabestellung auf der einen und der anderen Seite des Totpunkts liegen. Auf diese Weise ist ein bistabiler Kipphebel geschaffen, der in einfacher Weise von der Steuerscheibe zwischen der einen und der anderen Stellung hin- und hergeschaltet werden kann. Ein besonders geringer Bauaufwand ergibt sich, wenn zur Verwirklichung der Totpunktfeder eine einstückig am Kipphebel angeformte Federlasche verwendet wird.

Gemäß einer bevorzugten Ausführungsform der Erfindung ist ein Kipphebel-Schalter vorgesehen, der den Schaltzustand des Kipphebels erfassen kann. Dies ermöglicht eine elektronische Abfrage des Status des Gurtaufrollers hinsichtlich der Kindersicherungsfunktion. Beispielsweise kann auf diese Weise ein Gassack deaktiviert werden, wenn ein Kindersitz auf dem Vordersitz des Fahrzeugs durch den Gurtaufroller befestigt ist.

Der Kipphebel-Schalter kann beispielsweise so angeordnet sein, daß sein Taster direkt vom Kipphebel betätigt wird, wenn dieser sich beispielsweise in der Stellung für die Kindersicherungsfunktion befindet. Alternativ kann vorgesehen sein, daß der Kipphebel-Schalter indirekt betätigt wird, beispielsweise durch eine Schleppscheibe, die mit der Steuerscheibe gekoppelt ist und eine Rampenfläche aufweist, die mit dem Taster des Kipphebel-Schalters zusammenwirken kann. Diese Schleppscheibe weist eine Kulisse auf, in die ein an der Steuerscheibe angebrachter Zapfen eingreift, so daß die Steuerscheibe die Schleppscheibe immer dann mitnimmt, wenn der Zapfen an einem Ende der Kulisse anliegt. Die indirekte Betätigung des Kipphebel-Schalters ermöglicht, diesen an einer geeigneten Stelle am Gurtaufroller entfernt vom Kipphebel anzubringen.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 eine schematische Ansicht eines erfindungsgemäßen Gurtaufrollers;
- Figur 2 eine Abdeckkappe des Gurtaufrollers von Figur 1 mit einigen darin angebrachten Bauteilen und dem Kipphebel in der Blockierstellung;
- Figur 3 eine Ansicht entsprechend derjenigen von Figur 2 mit dem Kipphebel in der Freigabestellung;
- Figur 4 eine schematische Ansicht der Auslösescheibe, der Steuerscheibe und des Kipphebels kurz nach dem Schalten von der Freigabestellung in die Blockierstellung;
- Figur 5 eine Ansicht entsprechend derjenigen von Figur 4 kurz nach dem Schalten des Kipphebels von der Blockierstellung in die Freigabestellung;
- Figur 6 eine Ansicht der Auslösescheibe, der Steuerscheibe und des Kipphebels eines Gurtaufrollers gemäß einer zweiten Ausführungsform, wobei sich der Kipphebel in der Freigabestellung befindet;
- Figur 7 eine Ansicht entsprechend derjenigen von Figur 6 mit dem Kipphebel in der Blockierstellung;
- Figur 8 eine schematische Ansicht der Steuerscheibe und des Kipphebels eines Gurtaufrollers gemäß einer dritten Ausführungsform in einem ersten Zustand; und
- Figur 9 in einer Ansicht entsprechend derjenigen von Figur 8 die Steuerscheibe und den Kipphebel in einem zweiten Zustand.

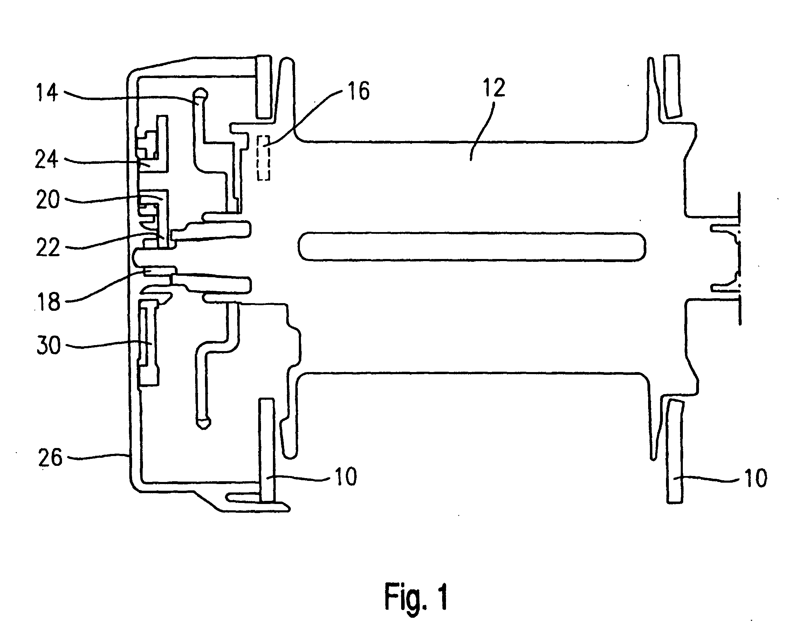

In Figur 1 ist schematisch ein Gurtaufroller gezeigt. Er enthält einen Rahmen 10, in welchem drehbar eine Gurtspule 12 gelagert ist. An der Gurtspule 12 ist eine Auslösescheibe 14 angebracht, die mit einer schematisch angedeuteten Blockierklinke 16 zusammenwirken kann. Die Blockierklinke 16 kann die Gurtspule 12 gegen eine Drehung in einer Gurtband-Abwickelrichtung blockieren. Die Auslösescheibe 14 und der Blockierhebel 16 sind Teil eines herkömmlichen Sperrmechanismus, der fahrzeugsensitiv oder gurtbandsensitiv ansprechen kann. Die konkrete Ausgestaltung eines solchen Sperrmechanismus ist dem Fachmann bekannt, so daß an dieser Stelle hierauf nicht weiter eingegangen wird. Für das Verständnis der Erfindung ist lediglich von Bedeutung, daß der Sperrmechanismus ausgelöst werden kann durch eine Relativdrehung zwischen Gurtspule 12 und Auslösescheibe 14. Diese Relativdrehung kann dadurch hervorgerufen werden, daß bei einer Drehung der Gurtspule in der Gurtbandabwickelrichtung die Auslösescheibe festgehalten wird.

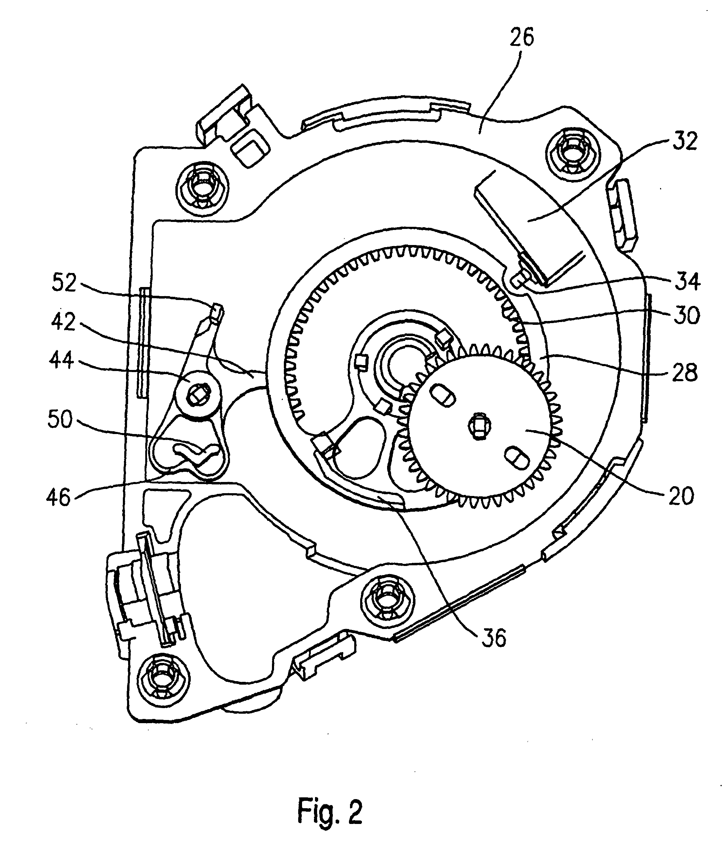

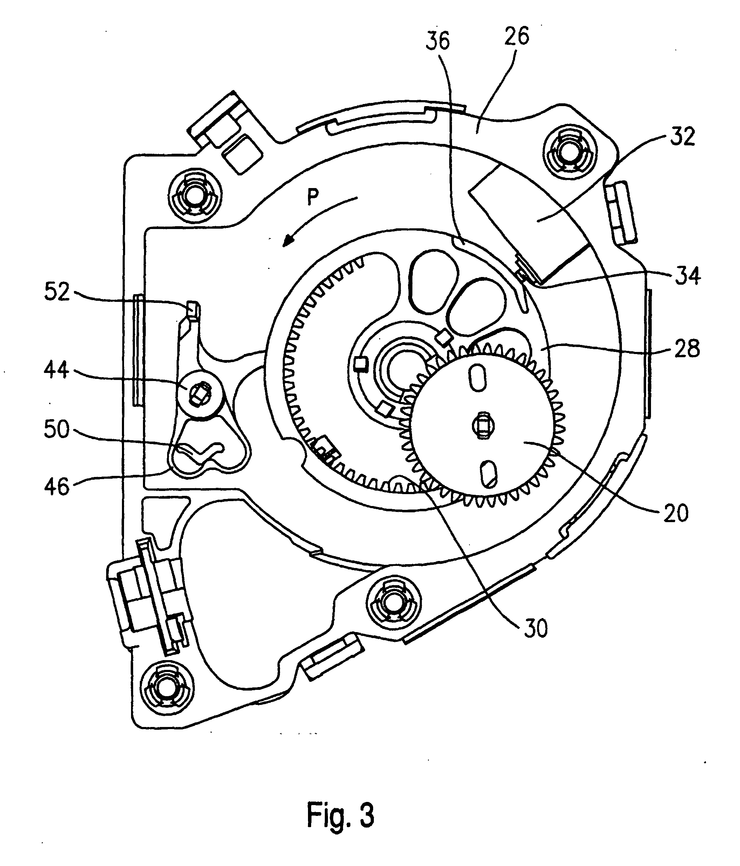

Drehfest mit der Gurtspule 12 ist ein Ritzel 18 verbunden (siehe Figur 1), das mit einem Untersetzungszahnrad 20 (siehe auch die Figuren 2 und 3) zusammenwirkt. Das Untersetzungszahnrad 20 weist einen ersten Zahnabschnitt 22 mit großem Durchmesser sowie einen zweiten Zahnabschnitt 24 auf, der einen kleinen Durchmesser hat und fest mit dem ersten Zahnabschnitt verbunden ist. Das Zahnrad 20 ist drehbar in einer Abdeckung 26 gelagert, die am Rahmen 10 des Gurtaufrollers angebracht ist.

Mit dem zweiten Zahnabschnitt 24 des Zahnrades 20 ist eine Steuerscheibe 28 verbunden, die drehbar in der Abdeckung 26 gelagert ist, wobei ihre Drehachse mit der Drehachse der Gurtspule 12 zusammenfällt. Das von dem Zahnrad 20, dem Ritzel 18 und einer Verzahnung 30 der Steuerscheibe 28 gebildete Untersetzungsgetriebe untersetzt eine Drehung der Gurtspule 12 derart, daß die Steuerscheibe 28 etwa eine halbe Umdrehung ausführt, wenn das Gurtband vollständig von der Gurtspule 12 abgezogen wird.

Zur Verwirklichung einer Insassenerfassungsfunktion ist im Gehäuse 26 ein Schalter 32 vorgesehen, der als Mikroschalter mit einem Taster 34 ausgebildet ist. Dem Taster 34 ist eine Rampenfläche 36 zugeordnet, die an der Steuerscheibe 28 ausgebildet ist. Die Rampenfläche 36 ist so an der Steuerscheibe 28 angeordnet, daß der Schalter 32 betätigt ist, wenn das Gurtband nahezu vollständig auf der Gurtspule aufgewickelt ist. Nachdem eine vorbestimmte Menge Gurtband abgezogen wird und sich die Steuerscheibe 28 in der in Figur 3 durch den Pfeil P bezeichneten Richtung verdreht hat, wird der Taster 34 von der Rampenfläche 36 freigegeben, so daß der Schalter 32 geöffnet wird. Dieser Zustand des Schalters kann so interpretiert werden, daß auf dem dem Sicherheitsgurt zugeordneten Sitz des Fahrzeugs ein Fahrzeuginsasse Platz genommen und sich angeschnallt hat.

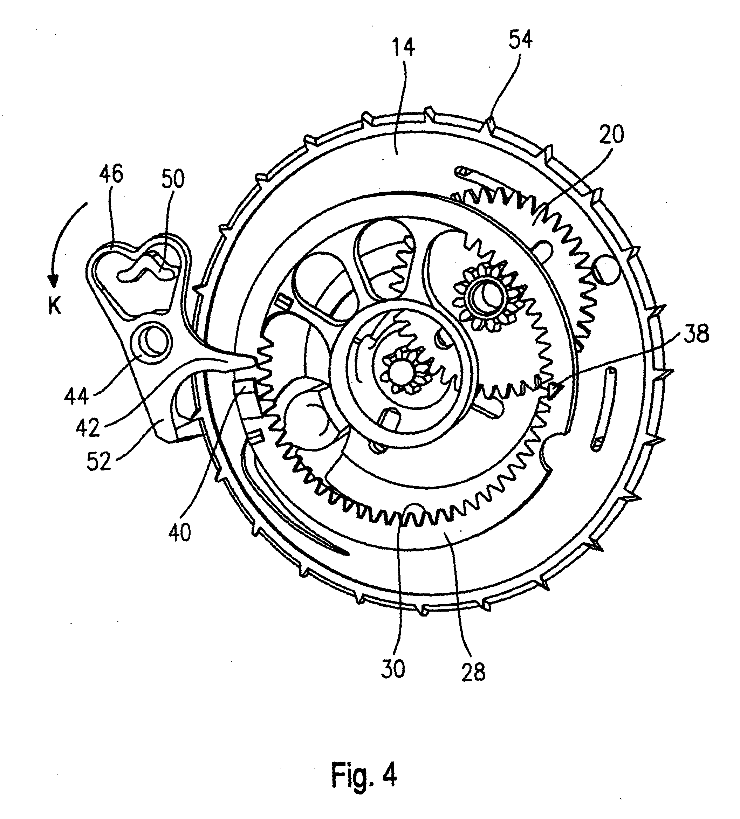

Die Steuerscheibe 28 ist ferner mit zwei Anschlägen 38, 40 (siehe die Figuren 3 und 4) versehen, die mit einem Kipparm 42 eines Kipphebels 44 zusammenwirken können. Der Kipphebel 44 ist schwenkbar an der Abdeckung 26 gelagert und kann zwei bistabile Stellungen einnehmen. Zu diesem Zweck ist der Kipphebel 44 mit einer einstückig angeformten Federlasche 46 versehen, die einen Scheitelpunkt 48 aufweist. Die Federlasche 46 wirkt mit einem Vorsprung 50 zusammen, der an der Abdeckung 26 des Gurtaufrollers ausgebildet ist.

Der Kipphebel 46 ist ferner mit einem Blockierarm 52 versehen, der mit einer am Umfang der Auslösescheibe 14 ausgebildeten Verzahnung 54 zusammenwirken kann. Der Kipparm 42, der Blockierarm 52 sowie die Federlasche 46 sind so ausgestaltet, daß der Schwerpunkt des Kipphebels 44 auf seiner Drehachse liegt. Auf diese Weise ist verhindert, daß auf den Gurtaufroller einwirkende Beschleunigungen ein unerwünschtes Schalten des Kipphebels hervorrufen können.

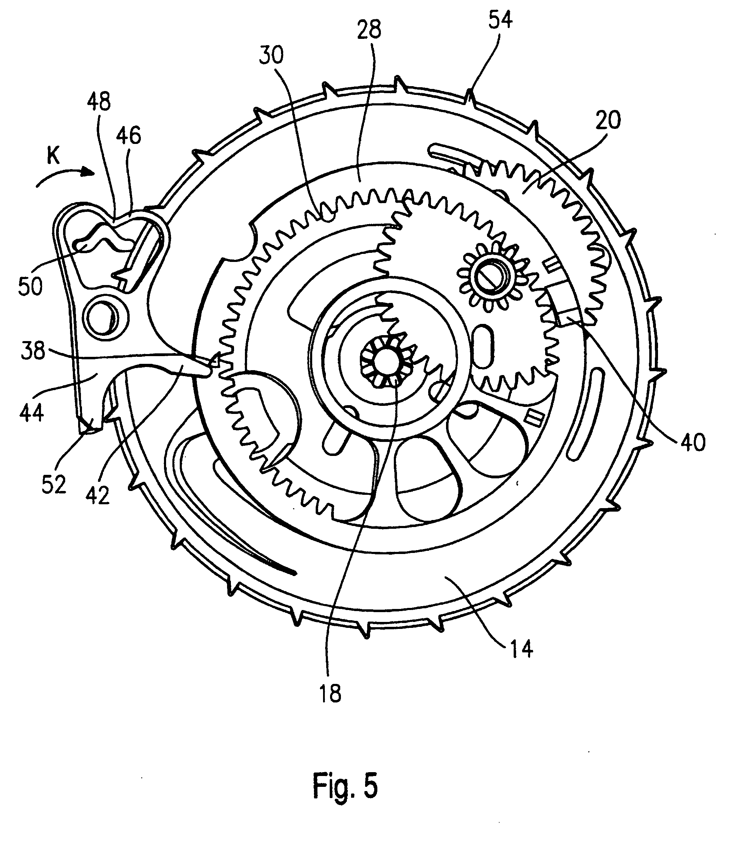

In den Figuren 3 und 5 ist der Kipphebel 44 in seiner Freigabestellung gezeigt, in der er nicht mit der Verzahnung 54 der Auslösescheibe 14 zusammenwirkt. Daher kann Gurtband frei von der Gurtspule des Gurtaufrollers abgezogen werden. Wenn das Gurtband vollständig abgezogen wird, gelangt der Anschlag 40 in Anlage an den Kipparm 42 des Kipphebels 44, so daß der Kipphebel 44 bei fortgesetzter Drehung der Steuerscheibe 28 mittels des Anschlags 40 in der Richtung des Pfeils K von Figur 4 verschwenkt wird. Dabei rutscht der Scheitelpunkt 48 der Federlasche 46 über den Vorsprung 50, so daß sich der Kipphebel 44 in seiner stabilen Blockierstellung befindet. Der gerade in seine Blockierstellung verschwenkte Kipphebel ist in Figur 4 gezeigt. In der Blockierstellung greift der Blockierarm 52 in die Verzahnung 54 der Auslösescheibe 14 ein. Aufgrund der sägezahnförmigen Zähne der Verzahnung 54 kann die Auslösescheibe 14 bei einer Drehung, die dem Aufwickeln des Gurtbandes auf die Gurtspule entspricht, unter dem Blockierarm 54 hindurchrutschen. Wenn dagegen versucht wird, Gurtband von der Gurtspule abzuziehen, blockiert der Blockierarm 52 die Auslösescheibe 14, so daß sie hinter der Drehung der Gurtspule zurückbleibt. Dies aktiviert den Sperrmechanismus des Gurtaufrollers, so daß die Gurtspule gegen eine weitere Drehung in der Gurtbandabzugsrichtung blockiert wird. Auf diese Weise wird eine Kindersicherungsfunktion erzielt. Erst wenn soviel Gurtband auf die Gurtspule 12 aufgewickelt wurde, daß der Anschlag 38 mit dem Blockierarm 42 zusammenwirkt, wird der Kipphebel 44 in der Richtung des Pfeils K von Figur 5 aus der Blockierstellung in die Freigabestellung verschwenkt, wobei wieder der Scheitelpunkt 48 über den Vorsprung 50 rutscht. Somit ist die Kindersicherungsfunktion wieder aufgehoben, und das Gurtband kann frei von der Gurtspule abgezogen werden. Der gerade vom Anschlag 38 in die Freigabestellung verschwenkte Kipphebel ist in Figur 5 gezeigt. Der Anschlag 38 ist an der Steuerscheibe 28 üblicherweise so angeordnet, daß das Umschalten von der Blockierstellung in die Freigabestellung erfolgt, kurz bevor das Gurtband vollständig auf der Gurtspule aufgenommen ist.

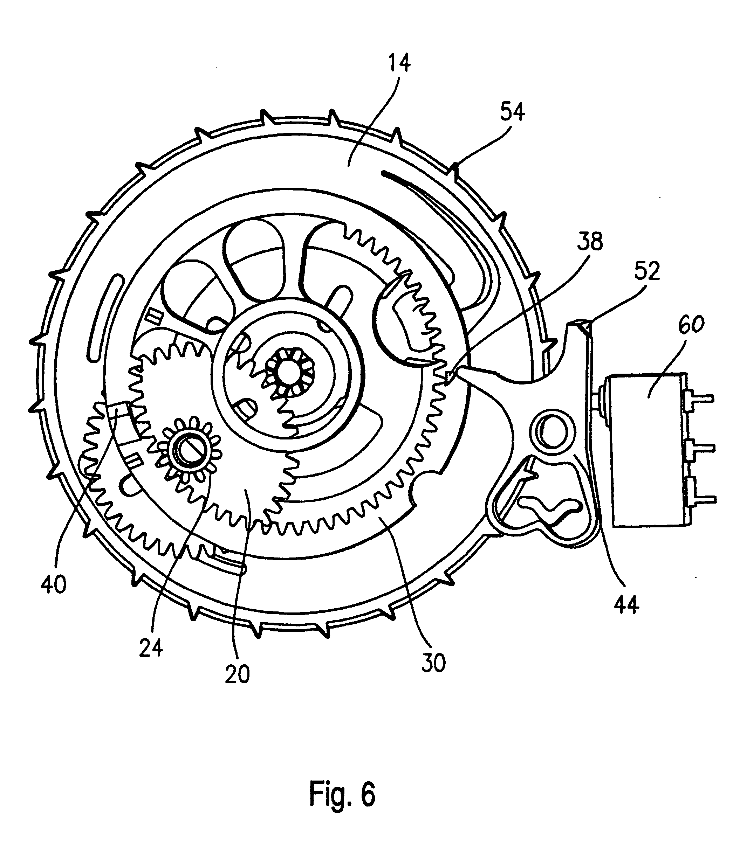

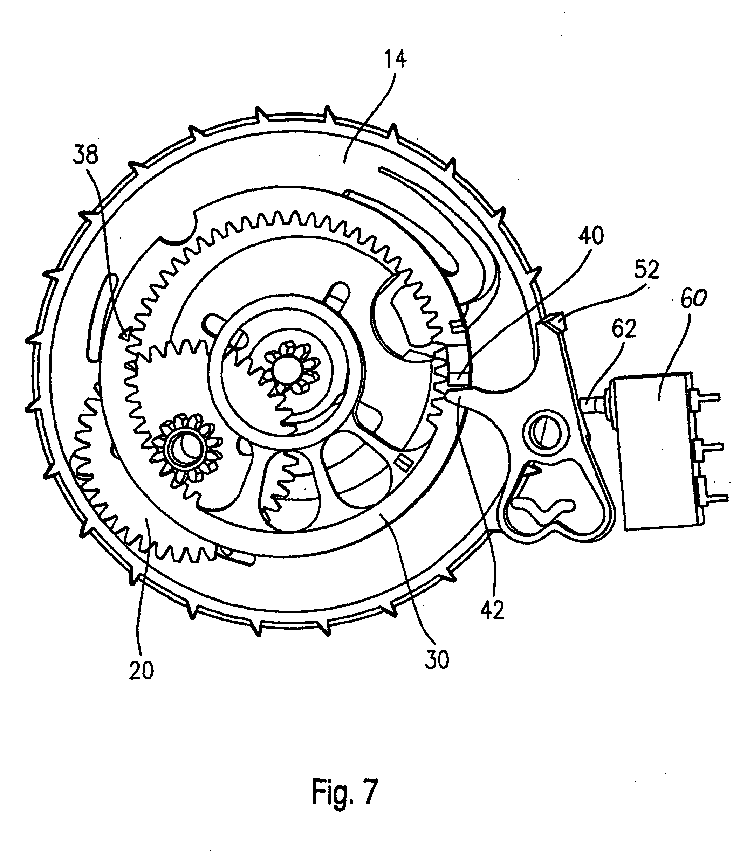

In den Figuren 6 und 7 sind die Auslösescheibe 14, die Steuerscheibe 28 sowie der Kipphebel 44 eines Gurtaufrollers gemäß einer zweiten Ausführungsform gezeigt. Die zweite Ausführungsform entspricht im wesentlichen der ersten Ausführungsform, wobei bei der zweiten Ausführungsform zusätzlich ein Kipphebel-Schalter 60 vorgesehen ist, der hier als Mikroschalter mit einem Taster 62 ausgebildet ist. Der Kipphebel-Schalter 60 ist so in der (in den Figuren 6 und 7 nicht dargestellten) Abdeckung 26 des Gurtaufrollers angeordnet, daß er betätigt ist, wenn sich der Kipphebel 44 in der Freigabestellung befindet (siehe Figur 6), und freigegeben ist, wenn sich der Kipphebel 44 in der Blockierstellung befindet (siehe Figur 7). Dies ermöglicht, den Schaltzustand für die Kindersicherungsfunktion extern abzufragen.

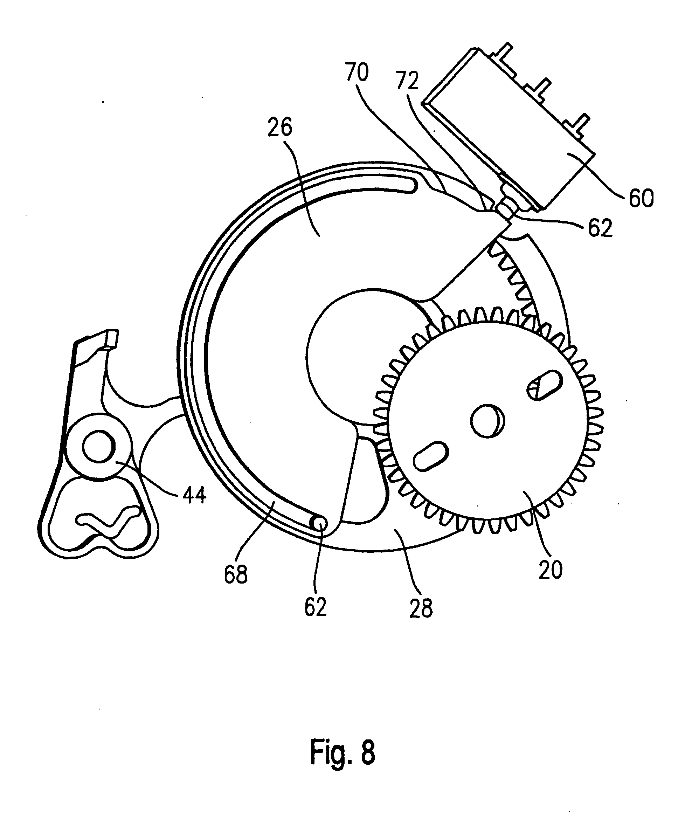

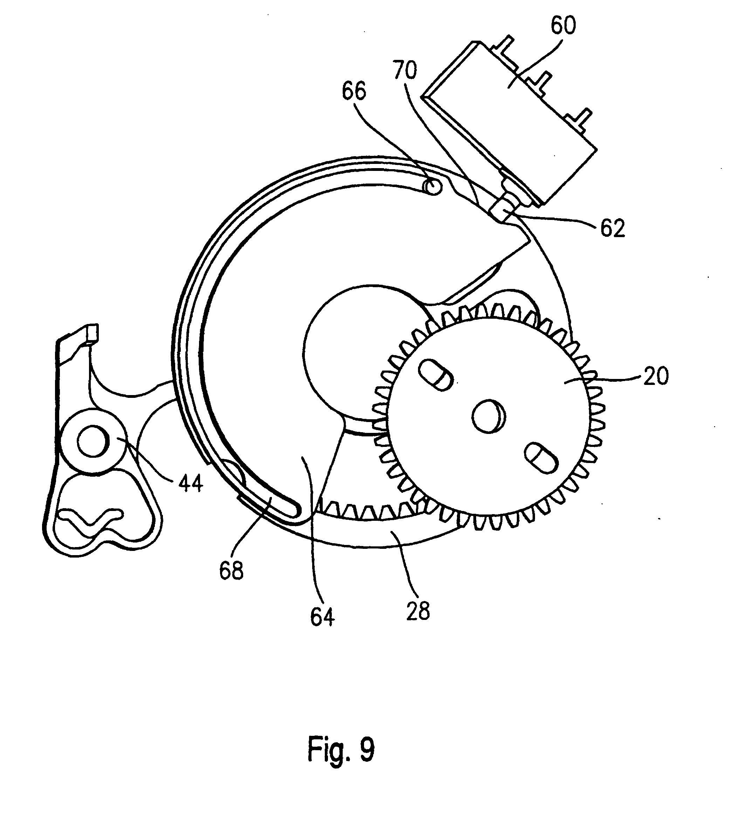

In den Figuren 8 und 9 sind die Steuerscheibe 28 und der Schalter 60 für einen Gurtaufroller gemäß einer dritten Ausführungsform gezeigt. Im Unterschied zur zweiten Ausführungsform wird hier der Kipphebel-Schalter 60 nicht mehr direkt von dem Kipphebel 44 betätigt, sondern indirekt. Es ist eine Schleppscheibe 64 vorgesehen, die verschiebbar an der Steuerscheibe 28 gelagert ist. Die Steuerscheibe 28 ist mit einem Zapfen 66 versehen, der in eine Kulisse 68 der Schleppscheibe 64 eingreift. Der Zapfen 66 an der Steuerscheibe 28 und die Kulisse 28 in der Schleppscheibe 64 sind so aufeinander abgestimmt, daß eine Aussparung 70 in der Schleppscheibe dem Taster 62 des Mikroschalters 60 dann gegenüberliegt, wenn sich der Kipphebel 64 in seiner Freigabestellung befindet, in der die Kindersicherungsfunktion nicht aktiv ist (siehe Figur 9).

Wenn dagegen die Steuerscheibe 28 so weit verdreht wird, daß sie den Kipphebel in die Blockierstellung bringt (siehe Figur 8), gelangt der Zapfen 66 in Anlage an einem Ende der Kulisse 68, so daß eine am Ende der Aussparung 70 vorgesehene Rampenfläche 72 mit dem Taster 62 des Mikroschalters 60 zusammenwirkt und ihn betätigt. Die Schleppscheibe 64 verbleibt in dieser Stellung, in der der Schalter 60 betätigt ist, so lange, bis der Zapfen 66 am anderen Ende der Kulisse 68 in Anlage gelangt (siehe den in Figur 9 dargestellten Zustand) und die Schleppscheibe 64 im Uhrzeigersinn mitnimmt, so daß der Taster 62 wieder im Bereich der Aussparung 70 liegt.

## Patentansprüche

1. Gurtaufroller für einen Fahrzeug-Sicherheitsgurt, mit einem Rahmen (10), einer Gurtspule (12), die in dem Rahmen drehbar angebracht ist, einem Sperrmechanismus (14, 16) mit einer Auslösescheibe (14), mittels dem die Gurtspule drehfest gegen Gurtbandabzug im Rahmen blockiert werden kann, einer Steuerscheibe (28) und einem Untersetzungsgetriebe (18, 20, 30), das die Gurtspule mit der Steuerscheibe koppelt, wobei ein Kipphebel (44) vorgesehen ist, der von der Steuerscheibe (28) zwischen einer Freigabestellung, in der er nicht mit der Auslösescheibe (14) zusammenwirkt, und einer Blockierstellung verschwenkbar ist, in der er in die Auslösescheibe (14) eingreift, wodurch die Gurtspule (12) in Gurtbandabzugsrichtung drehfest blockiert werden kann, und ein Schalter (32), der von der Steuerscheibe (28) betätigt werden kann, wenn eine vorbestimmt Menge Gurtband von der Gurtspule abgezogen und die Steuerscheibe in eine bestimmte Stellung verdreht wurde, wobei die Steuerscheibe (28) mit zwei Anschlägen versehen ist, **dadurch gekennzeichnet, daß** die beiden Anschläge (38, 40) mit dem Kipphebel (44) zusammenwirken und ihn von der Freigabestellung in die Blockierstellung bringen können, und umgekehrt.

2. Gurtaufroller nach Anspruch 1, **dadurch gekennzeichnet, daß** der Schalter ein Mikroschalter (32) mit einem Taster (34) ist, der von einer Rampenfläche (36) an der Steuerscheibe (28) betätigt werden kann.

3. Gurtaufroller nach Anspruch 1 oder Anspruch 2, **dadurch gekennzeichnet, daß** der Kipphebel (44) mit einer Totpunktfeder (46) so zusammenwirkt, daß die Blockierstellung und die Freigabestellung auf der einen und der anderen Seite des Totpunkts liegen.

4. Gurtaufroller nach Anspruch 3, **dadurch gekennzeichnet, daß** der Kipphebel (44) mit einer einstückig angeformten Federlasche (46) versehen ist, die mit einem Vorsprung (50) am Gurtaufroller zusammenwirkt.

5. Gurtaufroller nach einem der vorhergehenden Ansprüche, **dadurch gekennzeichnet, daß** ein Kipphebel-Schalter (60) vorgesehen ist, der den Schaltzustand des Kipphebels erfassen kann.

6. Gurtaufroller nach Anspruch 5, **dadurch gekennzeichnet, daß** der Kipphebel-Schalter ein Mikroschalter (60) mit einem Taster (62) ist.

7. Gurtaufroller nach Anspruch 6, **dadurch gekennzeichnet, daß** der Taster (62) des Kipphebel-Schalters (60) direkt von dem Kipphebel (44) betätigt werden kann.

8. Gurtaufroller nach Anspruch 6, **dadurch gekennzeichnet, daß** eine Schleppscheibe (64) vorgesehen ist, die mit der Steuerscheibe (28) gekoppelt ist und eine Rampenfläche (72) aufweist, die mit dem Taster des Kipphebel-Schalters zusammenwirken kann.

9. Gurtaufroller nach Anspruch 8, **dadurch gekennzeichnet, daß** die Schleppscheibe mit einer Kulisse (68) und die Steuerscheibe (28) mit einem Zapfen (66) versehen ist, der in die Kulisse (68) eingreift, wobei die Steuerscheibe die Schleppscheibe immer dann mitnimmt, wenn der Zapfen an einem Ende der Kulisse anliegt.

## Claims

1. A belt retractor for a vehicle safety belt, comprising a frame (10), a belt spool (12) rotatably mounted in the frame, a locking mechanism (14, 16) having a release disk (14) and adapted to block rotation of the belt spool in the frame to prevent withdrawal of belt webbing, a control disk (28), and a reduction gear (18, 20, 30) which couples the belt spool with the control disk, a rocking lever (44) being provided which is adapted to be pivoted by the control disk (28) between a release position in which it does not cooperate with the release disk (14), and a blocking position in which it engages in the release disk (14), whereby the belt spool (12) can be blocked against rotation in the direction of belt webbing withdrawal, and a switch (32) being provided which is adapted to be actuated by the control disk (28) when a predetermined amount of belt webbing has been withdrawn from the belt spool and the control disk has been rotated to a predefined position, the control disk (28) being provided with two stops, **characterized in that** the two stops (38, 40) cooperate with the rocking lever (44) and are adapted to move it from the release position into the blocking position, and vice versa.

2. The belt retractor according to claim 1, **characterized in that** the switch is a microswitch (32) with a key (34) which is adapted to be actuated by a ramp surface (36) on the control disk (28).

3. The belt retractor according to claim 1 or claim 2, **characterized in that** the rocking lever (44) cooperates with a dead-center spring (46) such that the blocking position and the release position are situated on the one and the other side of the dead center, respectively.

4. The belt retractor according to claim 3, **characterized in that** the rocking lever (44) is provided with an integrally formed spring shackle (46) which cooperates with a projection (50) on the belt retractor.

5. The belt retractor according to any of the preceding claims, **characterized in that** a toggle switch (60) is provided which is adapted to sense the switching state of the rocking lever.

6. The belt retractor according to claim 5, **characterized in that** the toggle switch is a microswitch (60) having a key (62).

7. The belt retractor according to claim 6, **characterized in that** the key (62) of the toggle switch (60) is adapted to be actuated directly by the rocking lever (44).

8. The belt retractor according to claim 6, **characterized in that** a drag disk (64) is provided which is coupled to the control disk (28) and has a ramp surface (72) which is adapted to cooperate with the key of the toggle switch.

9. The belt retractor according to claim 8, **characterized in that** the drag disk is provided with a guide slot (68) and the control disk (28) is provided with a spigot (66) engaging in the guide slot (68), the control disk entraining the drag disk whenever the spigot abuts one end of the guide slot.

## Revendications

1. Enrouleur de ceinture pour une ceinture de sécurité de véhicule, comportant un cadre (10), une bobine de ceinture (12) qui est montée rotative sur le cadre, un mécanisme de blocage (14, 16) avec un disque de déclenchement (14), au moyen duquel la bobine de ceinture peut être bloquée de manière solidaire en rotation dans le cadre à l'encontre d'un retrait de la sangle de ceinture, un disque de commande (28) et un démultiplicateur (18, 20, 30) qui accouple la bobine de ceinture avec le disque de commande, et il est prévu un culbuteur (44) qui peut être pivoté entre une position de libération dans laquelle il ne coopère pas avec le disque de déclenchement (14) et une position de blocage dans laquelle il s'engage dans le disque de déclenchement (14), ce qui permet de bloquer de manière solidaire en rotation la bobine de ceinture (12) en direction de retrait de la sangle de ceinture, et un commutateur (32) qui peut être actionné par le disque de commande (28) lorsqu'une quantité prédéterminée de sangle de ceinture a été retirée de la bobine de ceinture et le disque de commande a été tourné dans une position déterminée, le disque de commande (28) étant pourvu de deux butées, **caractérisé en ce que** les deux butées (38, 40) coopèrent avec le culbuteur (44) et peuvent l'amener depuis la position de libération jusque dans la position de blocage, et inversement.

2. Enrouleur de ceinture selon la revendication 1, **caractérisé en ce que** le commutateur (32) est un microrupteur (32) avec un bouton-poussoir (34) qui peut être actionné par une surface en forme de rampe (36) sur le disque de commande (28).

3. Enrouleur de ceinture selon la revendication 1 ou 2, **caractérisé en ce que** le culbuteur (44) coopère avec un ressort de point mort (46) de telle sorte que la position de blocage et la position de libération sont situées de part et d'autre du point mort.

4. Enrouleur de ceinture selon la revendication 3, **caractérisé en ce que** le culbuteur (44) est pourvu d'une menotte de ressort (46) façonnée d'une seule pièce qui coopère avec une saillie (50) sur l'enrouleur de ceinture.

5. Enrouleur de ceinture selon l'une des revendications précédentes, **caractérisé en ce qu'**il est prévu un commutateur de culbuteur (60) qui peut détecter l'état de commutation du culbuteur.

6. Enrouleur de ceinture selon la revendication 5, **caractérisé en ce que** le commutateur de culbuteur est un microrupteur (60) avec un bouton-poussoir (62).

7. Enrouleur de ceinture selon la revendication 6, **caractérisé en ce que** le bouton-poussoir (62) du commutateur de culbuteur (60) peut être actionné directement par le culbuteur (44).

8. Enrouleur de ceinture selon la revendication 6, **caractérisé en ce qu'**il est prévu un disque traîné (64) qui est accouplé au disque de commande (28) et qui présente une surface en forme de rampe (72) qui peut coopérer avec le bouton-poussoir du commutateur de culbuteur.

9. Enrouleur de ceinture selon la revendication 8, **caractérisé en ce que** le disque traîné est pourvu d'une coulisse (68) et le disque de commande (28) est pourvu d'un tourillon (66) qui s'engage dans la coulisse (68), le disque de commande entraînant toujours le disque traîné lorsque le tourillon est en appui à une extrémité de la coulisse.
